# EUROPÄISCHE PATENTSCHRIFT

(11) **EP 1 467 898 B1**
(45) Veröffentlichungstag und Bekanntmachung des Hinweises auf die Patenterteilung: **24.08.2005**
(21) Anmeldenummer: 03704239.7
(22) Anmeldetag: 20.01.2003
(51) Int. Cl.: B60R 21/16, B60R 21/20

(54) **AIRBAGMODUL FÜR KRAFTFAHRZEUGE**
AIRBAG MODULE FOR MOTOR VEHICLES
MODULE DE COUSSIN GONFLABLE DE SECURITE DESTINE A DES VEHICULES

(30) Priorität: 25.01.2002 DE 10203960
(43) Veröffentlichungstag der Anmeldung: 20.10.2004
(73) Patentinhaber: Takata-Petri AG, 63743 Aschaffenburg (DE)
(72) Erfinder: MAROTZKE, Thomas, 16562 Bergfelde (DE); LUTTER, Gerhard, 16562 Bergfelde (DE)
(74) Vertreter: Baumgärtel, Gunnar
(86) Internationale Anmeldenummer: PCT/DE2003/000171
(87) Internationale Veröffentlichungsnummer: WO 2003/062023

(56) Entgegenhaltungen:
- DE-A- 19 951 029
- DE-U- 20 012 077
- DE-U- 20 102 107

## Beschreibung

Die Erfindung betrifft ein Airbagmodul für Kraftfahrzeuge nach dem Oberbegriff des Patentanspruchs 1.

Ein Airbagmodul gemäß dem Oberbegriff des Anspruchs 1 ist aus DE 201 02 107 U, DE 199 51 029 A oder DE 200 12 077 U bekannt.

Ein derartiges Airbagmodul umfasst einen Gassack, der zum Schutz eines Fahrzeuginsassen mittels eines Gasgenerators aufblasbar ist, eine Abdeckung, hinter der der Gassack im gefalteten Zustand zusammen mit dem Gasgenerator angeordnet ist und die beim Aufblasen des Gassackes eine Öffnung für den sich entfaltenden Gassack freigibt, sowie einen ortsfest angeordneten Emblembereich.

Es ist üblich, dass Airbagmodule, insbesondere sogenannte Fahrerairbagmodule, die am Lenkrad eines Kraftfahrzeugs angeordnet sind, einen Emblembereich aufweisen, der mit einem Emblem des Herstellers des entsprechenden Fahrzeugs versehen ist. Bildet der Emblembereich einen Bestandteil einer Klappe der Airbagabdeckung, die schwenkbar an dem Modulgehäuse angelenkt ist und die beim Aufblasen des Gassackes in einem Crash-Fall durch Verschwenken eine Öffnung für den sich entfaltenden Gassack freigibt, so besteht das Problem, dass das Verletzungsrisiko eines Fahrzeuginsassen durch eine Kollision mit der Klappe erhöht ist, da für die Embleme häufig härtere und schwerere Materialien (z.B. Metall) verwendet werden als für den Grundkörper der Klappe selbst, der aus Kunststoff besteht. Das Verletzungsrisiko besteht insbesondere in einem sogenannten oop-Fall, in dem ein Fahrzeuginsasse außerhalb seiner normalen Sitzposition in Richtung auf das Airbagmodul vorgebeugt ist. Darüberhinaus besteht das Problem, dass aufgrund des Gewichtes des Emblems sowohl die Anbindung der Klappe an das Airbagmodul, die in der Regel über ein Filmscharnier erfolgt, als auch der aus einem vergleichsweise weichen Material bestehende Grundkörper der Klappe zu starken Belastungen ausgesetzt sein können.

Es ist daher bekannt, den Emblembereich so anzuordnen und den Gassack so auszubilden, dass beim Aufblasen des Gassackes der Emblembereich ortsfest fixiert ist und die aufblasbaren Bereiche des Gassackes um das Emblem herumgeführt werden. Hierzu kann der Gassack beispielsweise als Ringluftsack ausgebildet sein, der im aufgeblasenen Zustand das zentral innerhalb des Ringes angeordnete Emblem umschließt. Hierbei kann jedoch ein erhöhtes Verletzungsrisiko für einen durch das entsprechende Airbagmodul zu schützenden Fahrzeuginsassen darin bestehen, dass dieser (insbesondere in einem oop-Fall) in die durch den Ringluftsack gebildete Öffnung eintaucht und mit dem feststehenden Emblem kollidiert. Es müssen daher zusätzliche Maßnahmen getroffen werden, mit denen sichergestellt werden kann, dass beim Aufblasen des Ringluftsackes dessen Öffnung derart verschlossen wird, dass das Eindringen eines Körperteiles, vor allem des Kopfes, des zu schützenden Insassen in die Öffnung vermieden wird.

Der Erfindung liegt das Problem zugrunde, ein Airbagmodul der eingangs genannten Art zu schaffen, das bei einfachem Aufbau das Verletzungsrisiko eines Fahrzeuginsassen durch Kollision mit dem Emblembereich eines Airbagmodules minimiert.

Dieses Problem wird erfindungsgemäß durch die Schaffung eines Airbagmoduls mit den Merkmalen des Patentanspruchs 1 gelöst.

Danach weist der Gassack in seiner Hülle eine Öffnung auf, durch die hindurch der Emblembereich beim Entfalten des Gassackes in dessen Innenraum gelangt, wobei die Öffnung derart angeordnet ist, dass sie im aufgeblasenen Zustand des Gassackes nicht in Richtung auf den Oberkörper des zu schützenden Fahrzeuginsassen weist.

Die erfindungsgemäße Lösung hat den Vorteil, dass der Emblembreich in einem Crash-Fall durch den sich entfaltenden Gassack abgedeckt und hierdurch eine Kollision des Emblembereiches mit dem Oberkörper eines Fahrzeuginsassen (einschließlich dessen Kopf) verhindert wird. Insbesondere in einem oop-Fall, in dem der Fahrzeuginsasse beim Auslösen des Airbagmodules in Richtung auf das Airbagmodl vorgebeugt ist, wird so das Verletzungsrisiko erheblich vermindert.

Gleichzeitig kann die mindestens eine Klappe des Airbagmodules, bei deren Verschwenken die Öffnung freigegeben wird, durch die hindurch sich der Gassack aus dem Airbagmodul heraus entfaltet, verglichen mit solchen Fällen, in denen der Emblembereich einen Bestandteil dieser Klappe bildet, eine reduzierte Größe aufweisen. Dadurch wird eine Überlastung der Klappenanbindung beim Verschwenken der Klappe vermieden und die Gefahr vermindert, die in einem Crash-Fall von sich bewegenden, schweren Bauteilen ausgehen kann.

Die Öffnung kann dabei im aufgeblasenen Zustand des Gassackes entweder in einer Richtung seitlich nach außen an dem Oberkörper des zu schützenden Insassen vorbei oder in eine Richtung weg von dem Oberkörper des zu schützenden Insassen weisen.

Bei einem Gassack, der ein Oberteil und ein Unterteil aufweist, wobei im aufgeblasenen Zustand des Gassackes das Oberteil dem Oberkörper des zu schützenden Insassen zugewandt ist, kann die Öffnung beispielsweise in dem Unterteil des Gassackes vorgesehen sein, das dem Oberkörper des zu schützenden Insassen abgewandt ist. Hierbei können Oberteil und Unterteil des Gassackes aus zwei separaten, miteinander verbundenen (insbesondere vernähten) Gassackzuschnitten bestehen, oder sie sind Bestandteile eines einzelnen, einstückigen Gassackzuschnittes, der ein Oberteil und ein Unterteil definiert. Andererseits kann die Öffnung auch im Bereich einer Verbindungsnaht von Oberteil und Unterteil (obere Gewebeplatte und untere Gewebeplatte) des Gassackes vorgesehen sein, so dass die zu Verfügungstellung der Öffnung, durch die hindurch der Emblembereich beim Entfalten des Gassackes in dessen Innenraum gelangt, keinen zusätzlichen Aufwand bei der Herstellung des Gassackes erfordert.

Darüberhinaus kann diese Öffnung auch als eine ohnehin erforderliche Abströmöffnung dienen, durch die hindurch beim und nach dem Aufblasen des Gassackes die eingeströmten Gase wieder in die Umgebung abgelassen werden können.

Sofern die Öffnung, durch die hindurch der Emblembereich beim Entfalten des Gassackes in dessen Innenraum gelangt, nicht gleichzeitig als Abströmöffnung dienen soll, kann sich von dieser Öffnung ein Schlauch in das Innere des Gassackes erstrecken, der den Emblembereich umschließt und an seinem der Öffnung abgwandten Ende derart verschlossen ist, dass beim Aufblasen des Gassackes kein Gas in den Schlauch eindringen kann. Hierzu kann der Schlauch an seinem der Öffnung abgewandten Ende an einer Baugruppe des Airbagmodules, z.B. an einem Gasgenerator oder einem Diffusor des Gasgenerators, festgelegt sein.

Weitere Merkmale und Vorteile der Erfindung werden bei der nachfolgenden Beschreibung eines Ausführungsbeispiels anhand der Figuren deutlich werden.

Es zeigen:
- Figur 1: - einen Schnitt durch ein Airbagmodul mit einem Modulgehäuse, einem Gassack und einem Gasgenera- tor zum Aufblasen des Gassackes;
- Figur 2: - eine Draufsicht auf das Airbagmodul aus Figur 1 bei einer teilweise aufgebrochenen Darstellung der Abdeckung des Modulgehäuses;
- Figur 3: - eine Draufsicht auf das Modulgehäuse aus Figur 1 mit vollständiger Abdeckung des Modulgehäuses;
- Figur 4: - das Modulgehäuse aus Figur 1 beim Entfalten des Gassackes;
- Figur 5: - das Modulgehäuse aus Figur 1 nach dem Entfalten des Gassackes;
- Figur 6: - einen Schnitt durch ein Airbagmodul aus Figur 1 in einer alternativen Ausgestaltung.

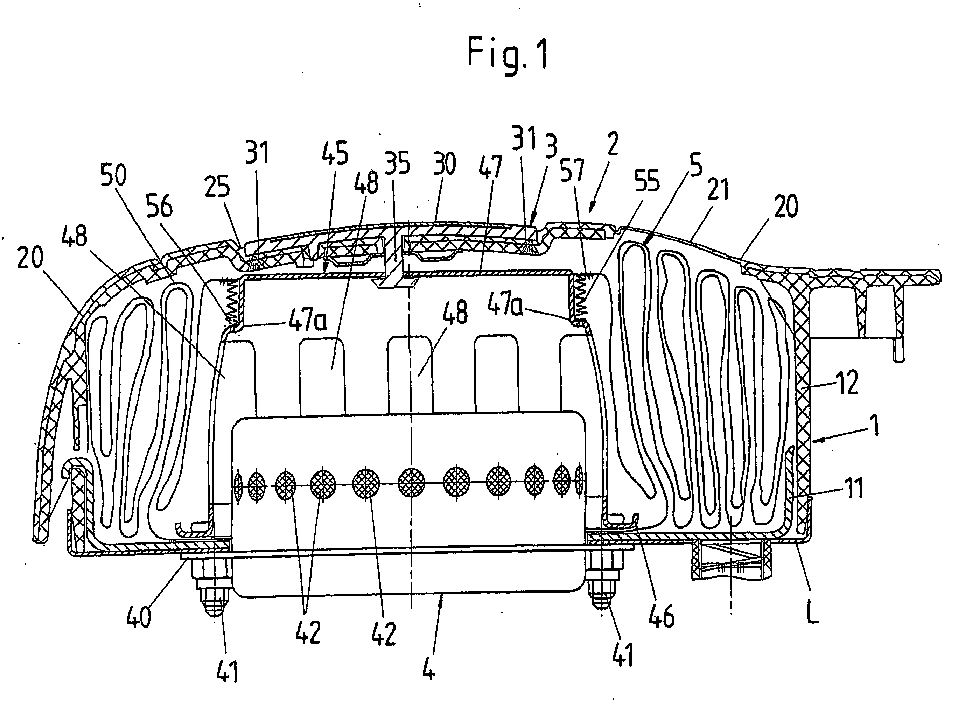

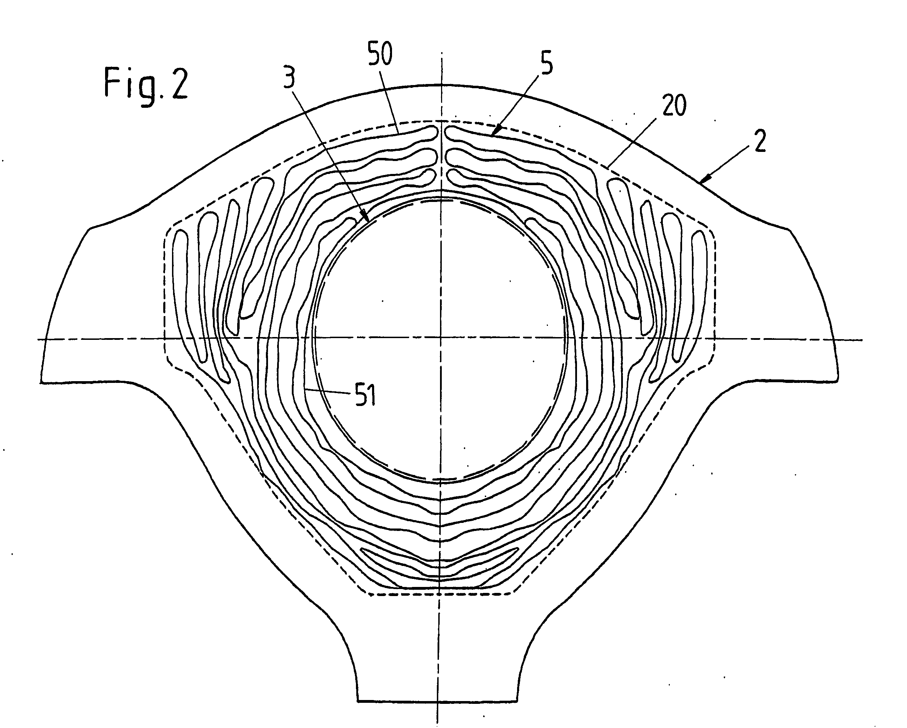

In den Figuren 1 bis 3 ist ein Airbagmodul dargestellt, das ein Modulgehäuse 1 mit einer Abdeckung 2, einen innerhalb des Gehäuses 1 angeordneten Gassack 5 sowie einen Gasgenerator 4 zum Aufblasen des Gassackes 5 aufweist. Bei dem Airbagmodul handelt es sich um ein Fahrerairbagmodul, das an einem Lenkrad eines Kraftfahrzeuges anzuorden ist und das zum Schutz des Fahrers des entsprechenden Kraftfahrzeugs dient.

Das Gehäuse 1 umfasst ein im wesentlichen topfförmiges unteres Gehäuseteil 11 sowie ein hiermit verrastetes oberes Gehäuseteil 12, die einen Hohlraum zur Aufnahme des Gasgenerators 4 und des Gassackes 5 bilden. An dem oberen Gehäuseteil 12 ist eine Abdeckung 2 vorgesehen, die beim Aufblasen des Gassackes 5 durch den Gasgenerator 4 eine Öffnung für den sich entfaltenden Gassack freigibt, so dass sich dieser in Richtung auf einen zu schützenden Fahrzeuginsassen entfalten kann.

Hierzu weist die Abdeckung 2 sechs Klappen 21, 22, 23, 24 auf, von denen bei Geradeausstellung des zugehörigen Lenkrades jeweils eine Klappe 22 bzw. 24 nach "12 Uhr" und "6 Uhr" weist und jeweils eine Klappe 21, 23 nach "10 Uhr", "2 Uhr", "4 Uhr" und "8 Uhr".

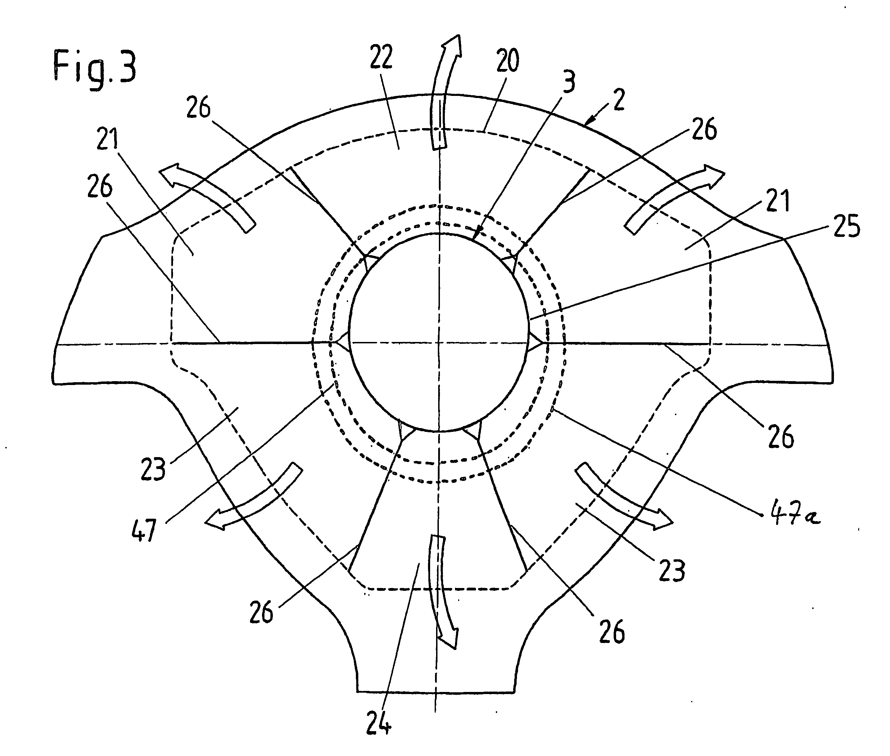

Die sechs Klappen 21 bis 24 sind über ein auf der Abdekkung 2 umlaufendes Filmscharnier 20 gelenkig mit dem Grundkörper der Abdeckung 2 verbunden, so dass die Klappen 21 bis 24 aufgrund der beim Entfalten des Gassackes 5 auftretenden Kräfte derart verschwenkt werden können, vgl. die entsprechenden Pfeile in Figur 3, dass sie eine den zentralen Emblembereich 3 der Abdeckung 2 ringförmig umgebende Öffnung für den sich entfaltenden Gassack freigeben. Nebeneinander angeordnete Klappen sind hierzu über jeweils eine Reißnaht 26 miteinander verbunden und die Klappen sind außerdem über eine weitere den Emblembereich 3 umschließende Reißnaht 25 mit dem Emblembereich 3 der Abdeckung 2 verbunden. Die genannten Reißnähte 25, 26 sind derart ausgeführt, dass sie bei einem Verschwenken der Klappen 21 bis 24 unter der Wirkung des sich entfaltenden Gassackes 5 aufreißen und die Entstehung einer Öffnung für den Gassack 5 nicht behindern.

Der zentrale Emblembereich 3 der Abdeckung 2 dient zur Aufnahme eines Emblems 30, das beispielsweise auf den Hersteller des entsprechenden Kraftfahrzeugs hinweisen kann. Der Emblembereich 3 ist in bekannter Weise über geeignete Befestigungselemente 35 mit dem Grundkörper der Abdeckung 2 verbunden.

Weiterhin sind in der Figur 1 schematisch zusätzliche Fixiermittel 31 dargestellt, mit denen der Emblembereich 3 gegenüber dem Grundkörper der Abdeckung 2 in einer Position vorfixiert werden kann. Dies spielt insbesondere dann eine Rolle, wenn eine Fixierung des Emblems 30 und/oder des Emblembereichs 3 auf dem Grundkörper der Abdeckung aus fertigungstechnischen Gründen notwendig ist, beispielsweise um das Emblem 30 und/oder den Emblembereich 3 mit der Abdekkung zu verschweissen, zu crimpen oder zu vernieten. Die gewünschte Ausrichtung des Emblems 30 wird so zuverlässig erreicht. Ist eine Vorfixierung nicht notwendig, so können Emblem 30, Abdeckung 2 und/oder ein Diffusor 45 auch nur durch die Befestigungsmittel 35 verbunden werden.

Zum Aufblasen des Gassackes 5 ist in dem Gehäuse 1 ein Gasgenerator 4 angeordnet, der mit seinem Flansch 40 über Verbindungsmittel 41 in Form einer Schraube mit einer zugeordneten Mutter am Boden des unteren Gehäuseteiles 11 befestigt ist. Zur Sicherung der Verrastung zwischen dem oberen und dem unteren Gehäuseteil 11 gegen Lösen, ist zwischen dem Flansch 40 und dem Boden des unteren Gehäuseteils 11 ein Sicherungsblech L angeordnet.

Über dem mit Ausströmöffnungen 42 versehenen Gasgenerator 4 ist ein ebenfalls mit Ausströmöffnungen 48 versehener Diffusor 45 angeordnet, der zum gezielten Einleiten aus dem Gasgenerator 4 ausströmender Gase in den Gassack 5 dient, wobei die Einströmrichtung der Gase in dem Gassack 5 durch die Anordnung der Ausströmöffnungen 48 des Diffusors 45 festgelegt ist.

Mit seinem abgewinkelten unteren Endabschnitt 46 ist der Diffusor 45 über die oben erwähnten Verbindungsmittel 41 mit dem Flansch 40 und dem unteren Gehäuseteil 11 verbunden. Gleichzeitig ist der Gassack 5 im Bereich seines Einblasmundes, durch den hindurch der Gasgenerator 4 in dem Gassack 5 eingeführt ist, zwischen dem abgewinkelten unteren Abschnitt 46 des Diffusors 45 und dem unteren Gehäuseteil 11 eingeklemmt und somit innerhalb des Airbagmodules fixiert.

Die obere Deckfläche 47 des Diffusors 45 dient der Fixierung des Emblembereiches 3 des Airbagmodules im zentralen Bereich des Airbagmodules, indem der Emblembereich 3 mit einem Befestigungsmittel 35 in die Deckfläche 47 des Diffusors 45 eingreift, so daß der Emblembereich 3 ortsfest mit dem (üblicherweise aus Metall bestehenden) Diffusor 45 verbunden ist. Hierdurch wird erreicht, dass der Emblembereich 3 und das zugehörige Emblem 30 bei einem Entfalten des Gassackes 5 im zentralen Bereich des Airbagmodules fixiert bleiben. Die sich beim Verschwenken der Klappen 21 bis 24 der Abdeckung 2 bildenden Öffnung umgibt somit den Emblembereich 3 ringförmig.

Der Emblembereich 3 ist in den gezeigten Figuren in einem gewissen Abstand zur oberen Deckfläche 47 des Diffusors 45 angeordnet. Eine entsprechende Ausgestaltung der Befestigungsmittel 35 kann dabei eine Relativbewegung des Emblembereichs 3 gegenüber der Deckfläche 47 ermöglichen. Der Zwischenraum zwischen der oberen Deckfläche 47 des Diffusors 45 und dem Emblembereich 3 kann für diesen Fall beispielsweise dazu genutzt werden, einen Mechanismus zur Auslösung eines Hupkontakts anzuordnen. In dem Zwischenraum können auch Mittel zur Überbrückung eines konstruktiv oder fertigungsbedingten Abstandes zwischen dem Emblembereich 3 und der Deckfläche 47 angeordnet werden, so dass der Emblembereich 3 gegenüber der Deckfläche 47 abgestützt wird. Der Emblembereich 3 kann aber auch direkt an der oberen Deckfläche 47 des Diffusors 45 anliegen.

Die Hülle 50 des Gassackes 5 ist in Falten gelegt, um den Gassack 5 in kompakter Form innerhalb des Gehäuses 1 verstauen zu können. Ferner weist die Hülle 50 des Gassackes 5 eine Öffnung 51 auf, die im gefalteten Zustand des Gassackes 5 die Deckfläche 47 des Diffusors 45 umgibt. Durch diese Öffnung 51 hindurch kann beim Entfalten des Gassakkes 5 der Emblembereich 3 des Airbagmodules in das Innere des Gassackes 5 eindringen, so dass das Entfalten des Gassackes 5 durch den räumlich fixierten zentralen Emblembereich 3 nicht behindert wird. Mit anderen Worten ausgedrückt ist die Öffnung 51 in der Gassackhülle 50 derart angeordnet und derart dimensioniert, dass sie beim Entfalten des Gassackes 5 über den Emblembereich 3 gezogen wird.

Um zu verhindern, dass durch die Öffnung 51 in der Gassackhülle 50 hindurch das in einem Crash-Fall aus dem Gasgenerator 4 in den Gassack 5 einströmende Gas in den Außenraum abströmen kann, ist ein flexibler Schlauch 55 aus Gewebe vorgesehen, dessen eines Ende 57 am Rand der Öffnung 51 (z.B. durch eine Naht) befestigt ist und das die Öffnung 51 vollständig umgibt und dessen anderes Ende 56 an einer Schulter 47a im Bereich der Deckfläche 47 des Diffusors 45 befestigt ist.

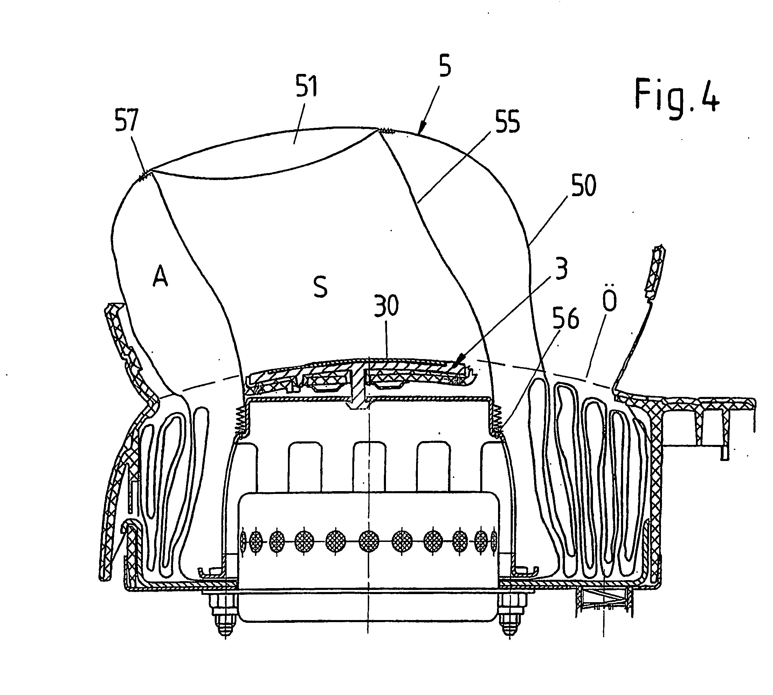

Der Schlauch 55 ist im gefalteten Zustand des Gassackes 5 im Bereich der Deckfläche 47 des Diffusors 45 um diesen herumgelegt und wird beim Entfalten des Gassackes 5 ebenso wie die Öffnung 51 in der Gassackhülle 50 über den Emblembereich 3 gezogen, wie anhand Figur 4 deutlich wird.

Figur 4 zeigt das Airbagmodul aus den Figuren 1 und 3 in einer Schnittdarstellung gemäß Figur 1 beim Entfalten des Gassackes 5, der durch aus dem Gasgenerator 4 austretenden Gase aufgeblasen wird. In Figur 4 ist insbesondere erkennbar, dass die Klappen 21 bis 24 der Abdeckung 2 des Modulgehäuses 1 beim Entfalten des Gassackes 5 derart verschwenken, dass sie eine dem Emblembereich 3 ringförmig umgebende Öffnung Ö freigeben, durch die hindurch sich der Gassack 5 entfalten kann. Hierbei werden zunächst die Öffnung 51 in der Gassackhülle 50 und anschließend der flexible Schlauch 55 über den zentralen Emblembereich 30 gezogen, so dass dieser innerhalb des Schlauches 55 angeordnet ist.

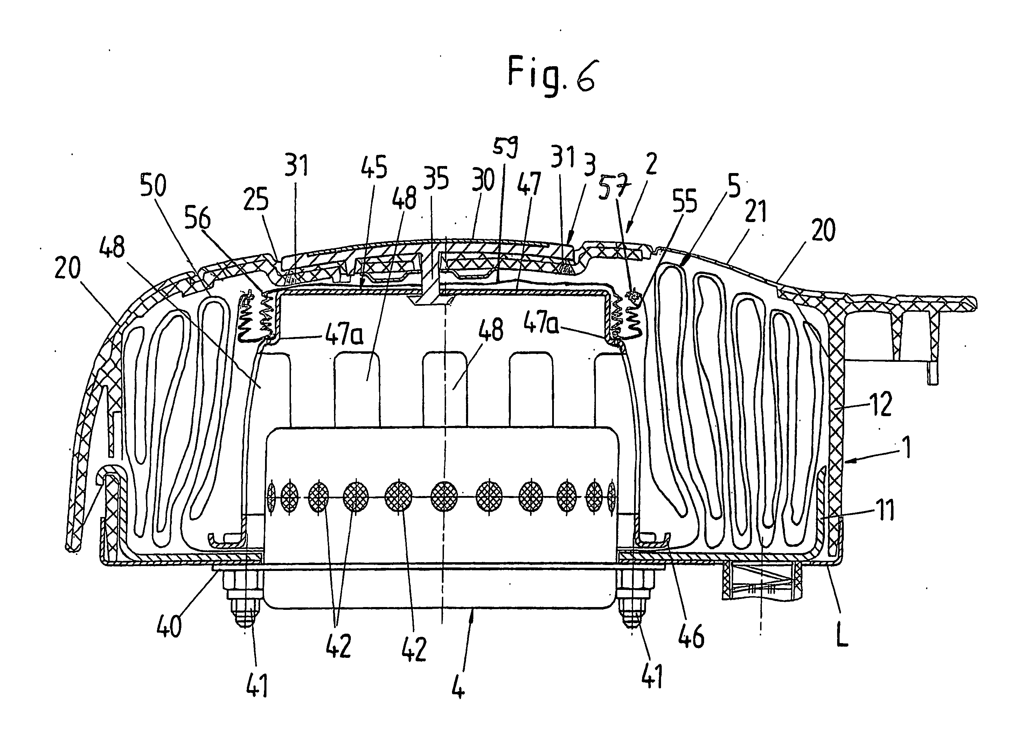

Durch den flexiblen Schlauch 55 wird das Innere des Gassackes 5 in zwei gasdicht voneinander getrennte Bereiche unterteilt. Der innerhalb des Schlauches 55 gelegene Gassackbereich S kommuniziert über die Öffnung 51 in der Hülle 50 des Gassackes 5 mit dem Außenraum, d.h. der Umgebung des Gassackes 5. In diesen innerhalb des flexiblen Schlauches 55 gelegenen Gassackbereich S können die aus dem Gasgenerator 4 ausströmenden Gase nicht gelangen, da der Schlauch 55 an seinem der Öffnung 51 abgewandten und innerhalb der Gassackhülle 50 angeordneten Ende 56 dadurch verschlossen ist, dass er an einer Schulter 47a des Diffusors 45 befestigt ist. Alternativ, wie in Figur 6 gezeigt, kann der Schlauch 55 an seinem innerhalb der Gassackhülle 50 gelegenen Ende 56 auch mittels eines Gewebelappens 59 oder einer sonstigen Deckfläche verschlossen sein. In diesem Fall verläuft der Gewebelappen 59 oder die sonstige Deckfläche am Ende 56 des Schlauches 55 unterhalb des Ensemblebereiches 3 zwischen diesem und der Deckfläche 47 des Diffusors 45.

Entscheidend ist allein, dass der Schlauch 55 an seinen beiden Enden 56, 57 jeweils derart angeordnet und ausgebildet ist, dass kein Gas in den von dem Schlauch 55 umgebenen Gassackbereich S einströmen kann. Hierdurch wird verhindert, dass durch die Öffnung 51 in der Hülle 50 des Gassackes 5 hindurch das in den Gassack 5 beim Aufblasen eintretendes Gas wieder abströmen kann. Diese Gase verbleiben vielmehr im Arbeitsbereich A des Gassackes 5, der nicht über die besagte Öffnung 51 mit dem Außenraum kommuniziert.

Andererseits ist es aber erforderlich, dass die beim Aufblasen des Gassackes 5 in diesen einströmenden Gase kontinuierlich in den Außenraum (die Umgebung des Gassackes 5) abgelassen werden. Hierzu sind in der Hülle 50 des Gassackes geeignete Abströmöffnungen vorzusehen.

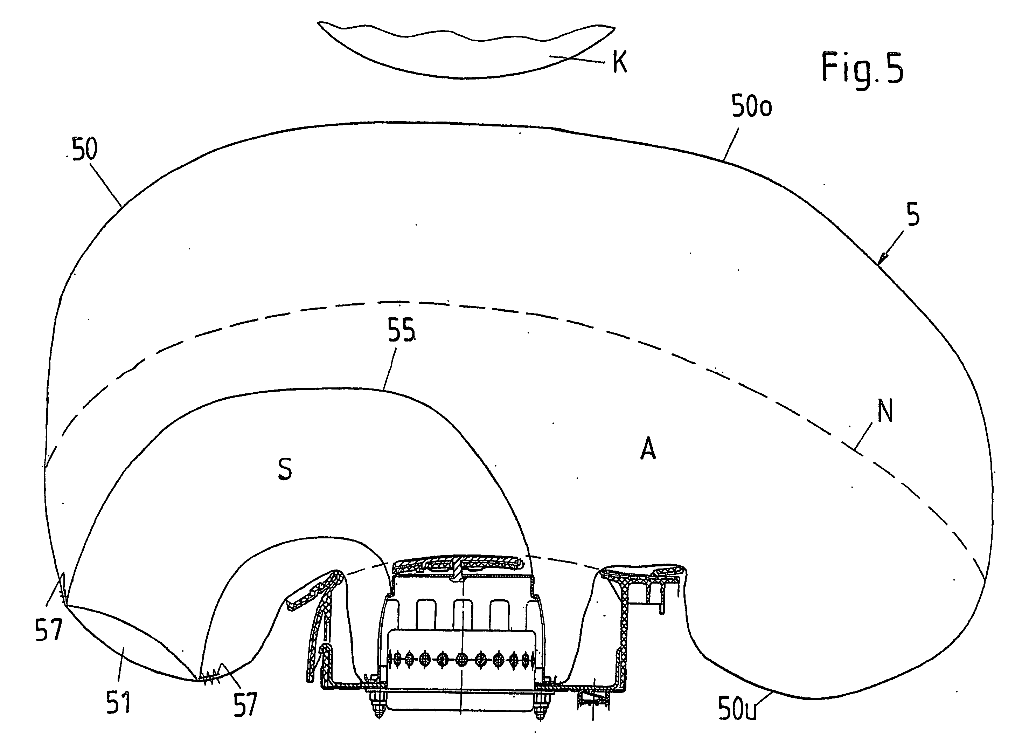

Figur 5 zeigt das Airbagmodul in einer Darstellung gemäß den Figuren 1 und 4 nach dem Aufblasen des Gassackes 5.

Anhand Figur 5 ist erkennbar, dass die Hülle 50 des Gassakkes 5 aus einem Unterteil 50u (Unterplatte) und einem Oberteil 50o (Oberplatte) besteht, die entlang einer Verbindungslinie N miteinander verbunden, insbesondere zur Bildung einer Verbindungsnaht miteinander vernäht sind. Im aufgeblasenen Zustand des Gassackes 5, wie er in Figur 5 dargestellt ist, ist das Oberteil 50o der Gassackhülle 50 dem Oberkörper (einschließlich dem Kopf) des zu schützenden Insassen zugewandt und das Unterteil 50u dem Oberkörper des zu schützenden Fahrzeuginsassen abgewandt.

Die Öffnung 51 in der Gassackhülle 50 befindet sich gemäß Figur 5 in dem Unterteil 50u der Gassackhülle 50 und ist somit dem Oberkörper des zu schützenden Fahzeuginsassen abgewandt. Hierdurch besteht keine Gefahr, dass der zu schützende Fahrzeuginsasse mit dem Emblembereich 3 des Airbagmodules kollidiert. Vielmehr ist dieser durch das Oberteil 50o des Gassackes 5 vollständig abgedeckt.

Die Öffnung 51 in der Gassackhülle 50 muss jedoch nicht zwingend auf der dem Oberkörper des zu schützenden Insassen vollständig abgewandten Seite der Gassackhülle 50 angeordnet sein. Es ist auch eine derartige seitliche Anordnung der Öffnung 51 in einem Bereich der Gassackhülle 50 denkbar, dass die Öffnung seitlich nach außen in einer Richtung an dem Oberkörper des zu schützenden Insassen vorbeiweist.

Hierzu kann die Öffnung 51 beispielsweise im Bereich der Verbindungsnaht N der beiden Teile 50o, 50u der Gassackhülle 50 vorgesehen sein. Insbesondere kann die Öffnung 51 durch eine Unterbrechung der Verbindungsnaht N gebildet werden.

Von Bedeutung ist allein, dass die Öffnung 51 nicht in denjenigen Bereich der Gassackhülle 50 mündet, der nach dem Aufblasen des Gassackes dem Oberkörper (einschließlich des Kopfes) des zu schützenden Insassen zugewandt ist. Die Lage des Oberkörpers K des zu schützenden Insassen ist in Figur 5 schematisch dargestellt.

## Patentansprüche

1. Airbagmodul für Kraftfahrzeuge mit
- einem Gassack, der zum Schutz eines Fahrzeuginsassen aufblasbar ist und dessen Hülle im aufgeblasenen Zustand des Gassackes einem dem Oberkörper des zu schützenden Fahrzeuginsassen zugewandten Abschnitt aufweist,
- einer Abdeckung des Airbagmoduls, hinter der der Gassack im gefalteten Zustand angeordnet ist und die beim Aufblasen des Gassackes eine Öffnung für den sich entfaltenden Gassack freigibt, und
- einem Emblembereich der Abdeckung, der ortsfest angeordnet ist,
wobei der Gassack (5) in seiner Hülle (50) eine Öffnung (51) aufweist, durch die hindurch der Emblembereich (3) beim Entfalten des Gassackes (5) in dessen Innenraum gelangt, **dadurch gekennzeichnet,**
**dass** die Öffnung (51) im aufgeblasenen Zustand des Gassackes (5) nicht in Richtung auf den Oberkörper (K) des zu schützenden Insassen weist.

2. Airbagmodul nach Anspruch 1, **dadurch gekennzeichnet, dass** die Öffnung (51) seitlich nach außen in einer Richtung an dem Oberkörper (K) des Insassen vorbei weist.

3. Airbagmodul nach Anspruch 1, **dadurch gekennzeichnet, dass** die Öffnung (51) in eine Richtung weg von dem Oberkörper (K) des Insassen weist.

4. Airbagmodul nach einem der vorhergehenden Ansprüche, **dadurch gekennzeichnet, dass** der Gassack (5) ein Oberteil (50o) und ein Unterteil (50u) aufweist, wobei im aufgeblasenen Zustand des Gassackes (5) das Oberteil (50o) dem Oberkörper (K) des zu schützenden Insassen zugewandt ist.

5. Airbagmodul nach Anspruch 4, **dadurch gekennzeichnet, dass** die Öffnung (51) in dem Unterteil (50u) des Gassackes (5) vorgesehen ist.

6. Airbagmodul nach einem der vorhergehenden Ansprüche, **dadurch gekennzeichnet, dass** der Gassack (5) aus mindestens zwei separaten, miteinander verbundenen Gassackteilen (50o, 50u) besteht.

7. Airbagmodul nach Anspruch 7, **dadurch gekennzeichnet, dass** die Öffnung (51) im Bereich einer Verbindungsnaht (N) der beiden Gassackteile (50o, 50u) vorgesehen ist.

8. Airbagmodul nach einem der vorhergehenden Ansprüche, **dadurch gekennzeichnet, dass** sich von der Öffnung (51) ein Schlauch (55) in das Innere des Gassackes (5) erstreckt, der den Emblembereich (3) umschließt.

9. Airbagmodul nach Anspruch 8, **dadurch gekennzeichnet, dass** der Schlauch (55) an seinem der Öffnung (51) abgewandten Ende (56) verschlossen ist, so dass beim Aufblasen des Gassackes (5) kein Gas in den Schlauch (55) eindringen kann.

10. Airbagmodul nach Anspruch 8 oder 9, **dadurch gekennzeichnet, dass** der Schlauch an seinem der Öffnung (51) abgewandten Ende (56) an einer Baugruppe (4, 45) des Airbagmodules, insbesondere an einem Gasgenerator oder an einem Diffusor des Gasgenerators, festgelegt ist.

11. Airbagmodul nach Anspruch 10, **dadurch gekennzeichnet, dass** der Schlauch (55) an der Baugruppe (4, 45) derart festgelegt ist, daß durch das der Öffnung (51) des Gassackes (5) abgewandte Ende (56) des Schlauches (55) kein Gas in diesen eindringen kann.

12. Airbagmodul nach einem der vorhergehenden Ansprüche,
**dadurch gekennzeichnet, dass** der Emblembereich (3) gegenüber einer Baugruppe (4, 45, 47) des Airbagmodules, insbesondere gegenüber einem Gasgenerator oder einem Diffusor des Gasgenerators, abgestützt ist.

13. Airbagmodul nach Anspruch 12, **dadurch gekennzeichnet, dass** der Emblembereich (3) über Stützmittel abgstützt ist.

14. Airbagmodul nach einem der vorstehenden Ansprüche,
**dadurch gekennzeichnet, dass** der Emblembereich (3) relativ gegenüber einer Baugruppe (4, 45, 47) des Airbagmodules, insbesondere gegenüber einem Gasgenerator oder einem Diffusor des Gasgenerators, beweglich ist.

15. Airbagmodul nach Anspruch 14, **dadurch gekennzeichnet, dass** der bewegliche Emblembereich (3) mit Übertragungsmitteln zur Auslösung eines elektrischen Kontakts, insbesondere eines Hupkontakts, verbunden ist.

## Claims

1. Airbag module for motor vehicles, having
- a gas bag which can be inflated to protect a vehicle occupant and the casing of which, in the inflated state of the gas bag, has a section facing the upper body of the vehicle occupant to be protected,
- a covering of the airbag module, behind which the gas bag is arranged in the folded state and which, when the gas bag is inflated, opens up an opening for the deploying gas bag, and
- an emblem region of the covering, which is arranged in a fixed position,
the gas bag (5) having, in its casing (50), an opening (51) through which the emblem region (3) passes into the interior of the gas bag (5) during deployment of the latter,
**characterized**
**in that**, in the inflated state of the gas bag (5), the opening (51) does not point in the direction of the upper body (K) of the occupant to be protected.

2. Airbag module according to Claim 1, **characterized in that** the opening (51) points laterally outwards in a direction past the upper body (K) of the occupant.

3. Airbag module according to Claim 1, **characterized in that** the opening (51) points in a direction away from the upper body (K) of the occupant.

4. Airbag module according to one of the preceding claims, **characterized in that** the gas bag (5) has an upper part (50o) and a lower part (50u), the upper part (50o) facing the upper body (K) of the occupant to be protected in the inflated state of the gas bag (5).

5. Airbag module according to Claim 4, **characterized in that** the opening (51) is provided in the lower part (50u) of the gas bag (5).

6. Airbag module according to one of the preceding claims, **characterized in that** the gas bag (5) comprises at least two separate gas bag parts (50o, 50u) which are connected to each other.

7. Airbag module according to Claim 6, **characterized in that** the opening (51) is provided in the region of a connecting seam (N) of the two gas bag parts (50o, 50u).

8. Airbag module according to one of the preceding claims, **characterized in that** a flexible tube (55) extends from the opening (51) into the interior of the gas bag (5) which surrounds the emblem region (3).

9. Airbag module according to Claim 8, **characterized in that** the flexible tube (55) is closed at its end (56) which faces away from the opening (51), with the result that, when the gas bag (5) is inflated, gas cannot penetrate into the flexible tube (55).

10. Airbag module according to Claim 8 or 9, **characterized in that** the flexible tube is secured at its end (56) which faces away from the opening (51) on a subassembly (4, 45) of the airbag module, in particular on a gas generator or on a diffuser of the gas generator.

11. Airbag module according to Claim 10, **characterized in that** the flexible tube (55) is secured on the subassembly (4, 45) in such a manner that gas cannot penetrate into the flexible tube (55) through that end (56) of the same which faces away from the opening (51) of the gas bag (5).

12. Airbag module according to one of the preceding claims, **characterized in that** the emblem region (3) is supported relative to a subassembly (4, 45, 47) of the airbag module, in particular relative to a gas generator or a diffuser of the gas generator.

13. Airbag module according to Claim 12, **characterized in that** the emblem region (3) is supported via supporting means.

14. Airbag module according to one of the preceding claims, **characterized in that** the emblem region (3) can be moved relative to a subassembly (4, 45, 47) of the airbag module, in particular relative to a gas generator or a diffuser of the gas generator.

15. Airbag module according to Claim 14, **characterized in that** the movable emblem region (3) is connected to transmission means for triggering an electrical contact, in particular a horn contact.

## Revendications

1. Module de coussin gonflable pour véhicules, comportant
- un coussin à gaz qui est gonflable pour protéger un passager de véhicule et dont l'enveloppe, à l'état gonflé du coussin à gaz, présente une portion tournée vers le torse du passager de véhicule à protéger,
- un couvercle du module de coussin gonflable, derrière lequel est agencé le coussin à gaz à l'état replié et qui, lors du gonflage du coussin à gaz, libère une ouverture pour le coussin à gaz qui se déploie, et
- une zone à emblème du couvercle, qui est agencée stationnaire,
le coussin à gaz (5) présentant dans son enveloppe (50) une ouverture (51) à travers laquelle la zone à emblème (3), lors du déploiement du coussin à gaz (5), parvient dans son espace intérieur **caractérisé en ce qu'**à l'état gonflé du coussin à gaz (5), l'ouverture (51) n'est pas tournée en direction du torse (K) du passager à protéger.

2. Module de coussin gonflable selon la revendication 1, **caractérisé en ce que** l'ouverture (51) est tournée latéralement vers l'extérieur, dans une direction passant à côté du torse (K) du passager.

3. Module de coussin gonflable selon la revendication 1, **caractérisé en ce que** l'ouverture (51) est tournée dans une direction en éloignement du torse (K) du passager.

4. Module de coussin gonflable selon l'une des revendications précédentes, **caractérisé en ce que** le coussin à gaz (5) présente une partie supérieure (50o) et une partie inférieure (50u), et à l'état gonflé du coussin à gaz (5), la partie supérieure (50o) est tournée vers le torse (K) du passager à protéger.

5. Module de coussin gonflable selon la revendication 4, **caractérisé en ce que** l'ouverture (51) est prévue dans la partie inférieure (50u) du coussin à gaz (5).

6. Module de coussin gonflable selon l'une des revendications précédentes, **caractérisé en ce que** le coussin à gaz (5) est constitué par au moins deux parties de coussin à gaz (50o, 50u) séparées et reliées l'une à l'autre.

7. Module de coussin gonflable selon la revendication 6, **caractérisé en ce que** l'ouverture (51) est prévue dans la région d'une couture de liaison (N) des deux parties de coussin à gaz (50o, 50u).

8. Module de coussin gonflable selon l'une des revendications précédentes, **caractérisé en ce que** depuis l'ouverture (51), un tuyau (55) s'étend jusqu'à l'intérieur du coussin à gaz (5) et entoure la zone à emblème (3).

9. Module de coussin gonflable selon la revendication 8, **caractérisé en ce que** le tuyau (55) est fermé à son extrémité (56) détournée de l'ouverture (51), de sorte que lors du gonflage du coussin à gaz (5), du gaz ne peut pas pénétrer dans le tuyau (55).

10. Module de coussin gonflable selon l'une ou l'autre des revendications 8 et 9, **caractérisé en ce que** le tuyau est fixé, à son extrémité (56) détournée de l'ouverture (51), sur un sous-ensemble (4, 45) du module de coussin gonflable, en particulier sur un générateur de gaz ou sur un diffuseur du générateur de gaz.

11. Module de coussin gonflable selon la revendication 10, **caractérisé en ce que** le tuyau (55) est fixé sur le sous-ensemble (4, 45) de telle sorte que du gaz ne peut pas pénétrer dans ledit tuyau à travers l'extrémité (56) du tuyau (55), qui est détournée de l'ouverture (51) du coussin à gaz (5).

12. Module de coussin gonflable selon l'une des revendications précédentes, **caractérisé en ce que** la zone à emblème (3) est supportée par rapport à un sous-ensemble (4, 45, 47) du module de coussin gonflable, en particulier par rapport à un générateur de gaz ou à un diffuseur du générateur de gaz.

13. Module de coussin gonflable selon la revendication 12, **caractérisé en ce que** la zone à emblème (3) est supportée par l'intermédiaire de moyens d'appui.

14. Module de coussin gonflable selon l'une des revendications précédentes, **caractérisé en ce que** la zone à emblème (3) est mobile par rapport à un sous-ensemble (4, 45, 47) du module de coussin gonflable, en particulier par rapport à un générateur de gaz ou à un diffuseur du générateur de gaz.

15. Module de coussin gonflable selon la revendication 14, **caractérisé en ce que** la zone à emblème (3) mobile est reliée à des moyens de transmission destinés à déclencher un contact électrique, en particulier un contact de klaxon.
